# EUROPÄISCHE PATENTANMELDUNG

(11) **EP 2 015 517 A2**
(43) Veröffentlichungstag der Anmeldung: **14.01.2009**
(21) Anmeldenummer: 08011888.8
(22) Anmeldetag: 02.07.2008
(51) Int. Cl.: H04L 12/40

(54) **Verfahren und Einrichtung zum Feststellen der Zuordnung eines Gerätes zu einem von mehreren möglichen Betriebs-Orten, insbesondere in der Kabine eines Luftfahrzeuges**

(30) Priorität: 13.07.2007 DE 102007032697
(71) Anmelder: Diehl Aerospace GmbH, 88662 Überlingen (DE)
(72) Erfinder: Grabmann, Jürgen, 90455 Nürnberg (DE)
(74) Vertreter: Diehl Patentabteilung

(57) **Zusammenfassung**

Es ergibt sich für eine Steuereinheit (11) eine automatische Feststellung darüber, welches Gerät (14) an welchem Ort (13) etwa längs eines Bus-Systems (12) betrieben wird, wenn jeder Ort (13) fest mit einem ihn individualisierenden, kontaktlos auslesbaren Ident-Transponder (16) ausgestattet ist, dessen Kennung von einem gerätefesten Lesegerät (17) jedenfalls bei der Geräteinstallation ausgelesen und zusammen mit seiner Geräteadresse an die Steuereinheit (11) übermittelt wird.

## Beschreibung

Die Erfindung betrifft die Merkmale gemäß den Oberbegriffen der beiden Hauptansprüche.

Um nicht jedes von einer Steuereinheit aus individuell ansteuerbare Gerät - wie eine Leuchte, einen Lüfter, eine Sprechstelle, einen Sensor o. dgl. etwa in der Gebäudetechnik, im Fahrzeugwesen oder im Anlagenbau - gesondert an zugeordnete Ausgänge eine Steuereinheit anschließen zu müssen, ist es üblich, die unter der Regie der Steuereinheit stehenden Geräte über ein Bus-System zu adressieren.

Ebenso wie der individuelle Anschluss an einen zugeordneten Ausgang der Steuereinheit muss aber auch das Einbinden in ein Bus-System dokumentiert werden; nämlich hinsichtlich des Ortes, an dem das, durch seine Adresse individualisierte, Gerät aktuell betrieben wird, damit es auch zweckentsprechend angesteuert werden kann. Die fortlaufende Aktualisierung und Verfügbarkeit solcher Dokumentation ist allerdings arbeitsaufwendig und fehleranfällig. Das wirkt sich besonderes kostentreibend aus, wo relativ häufig Umgruppierungen vorgenommen werden müssen, wie bei der Umrüstung der Ausstattung der Passagierkabinen in Luftfahrzeugen, aber auch etwa bei Reisebussen.

In Erkenntnis dieser Gegebenheiten liegt vorliegender Erfindung die technische Problemstellung zugrunde, eine selbsttätige fehlerfreie Zuordnung von Geräten zu ihren Betriebs-Orten zu ermöglichen.

Diese Aufgabe ist erfindungsgemäß durch die in den Hauptansprüchen angegebenen wesentlichern Merkmale gelöst. Danach ist jedes Gerät mit einer berührungslos arbeitenden Leseschaltung zur Abfrage der Kennung eines Transponders und jeder in Betracht kommende Betriebs-Ort mit einem solchen berührungslos abfragbaren Transponder als Orts-Identgeber ausgestattet. Mit Anschluss des Gerätes an einen von mehreren möglichen Betriebs-Orten fragt die Leseschaltung die Identität dieses Betriebs-Ortes ab und meldet sie, zweckmäßigerweise zugleich mit der eigenen Geräteadresse als Geräteidentifikation, etwa an eine zentrale Steuereinheit. Dort kann dann das gerade jenem Ort für den Betrieb gerade dieses Gerätes individuell zugeordnete Steuer- oder Auswerte-Programm aufgerufen werden, ohne dass dafür nun noch manuelle Zuordnungseingaben erforderlich wären. Das erleichtert Konfigurationsänderungen: Lediglich indem ein Gerät an einen anderen Ort versetzt oder dort zusätzlich angeschlossen wird, erfolgt sogleich die diesem Gerät nun zugeordnete Ortsangabe an die Steuereinheit.

Der Identgeber ist vorzugsweise ein passiv, also ohne eigene Energiequelle, arbeitender, kleinbauender RFID-Transponder mit an seinen Identchip angeschlossener magnetischer Langwellen-Antenne. Solch ein Transponder ist an jedem möglichen, also mit einem Gerät bestückbaren Betriebs-Ort fest eingebaut, seine Identkodierung individualisiert deshalb eineindeutig einen ganz bestimmten Ort in der Schaltungskonfiguration. Dessen individuelle Kodierung wird berührungslos abgefragt, wenn dort im Zuge einer Geräteinstallation ein Gerät mit seiner Leseschaltung montiert wird. Das installierte Gerät liest also die Identkodierung seines Betriebs-Ortes aus und übermittelt sie, vorzugsweise zusammen mit der eigenen Geräteadresse, an die Steuereinheit.

Die Funktion einer derartigen Leseschaltung ist etwa in der DE 1 97 17 505 A1 näher beschrieben. Wegen des vorliegend besonders geringen und konstruktiv vorgegebenen, konstanten Leseabstandes zwischen dem Gerät und dessen Anschlußstelle an seinem Betriebs-Ort kann die Leseschaltung hier aber, der dortigen gegenüber, extrem vereinfacht ausgelegt werden.

Der gerätetechnische Aufwand und der Raumbedarf für dieses Abfrage- und Identifikationssystem aus mobiler Leseschaltung und stationärem Transponder ist deshalb spürbar geringer, als etwa ein Einsatz von Steckerleistenpaaren pro Betriebs-Ort, mit einer mechanischen Orts-Kodierung über seine Steckerstifte; zumal wenn eine sehr große Anzahl an möglichen Betriebs-Orten eine entsprechend tiefreichende Kodierung erfordert.

Grundsätzlich braucht die Leseschaltung im Gerät nur einmal, nämlich zur Ortsabfrage bei und infolge der Geräteinstallation, betrieben zu werden. Es kann aber zweckmäßig sein, sie nicht nur infolge der Geräteinstallation, sondern darüber hinaus auch z.B. periodisch, auf Abruf oder in Abhängigkeit von vorgegebenen Betriebsgegebenheiten erneut zu aktivieren; um z.B. bei Betrieb mit besonders funktionskritischen Geräten ab und an zu verifizieren und zu dokumentieren, dass das angemeldete Gerät tatsächlich weiterhin am früher schon sensierten Ort betrieben wird; bzw. um festzustellen, an welchem Ort ein bisher dort betriebene Gerät entfernt wurde.

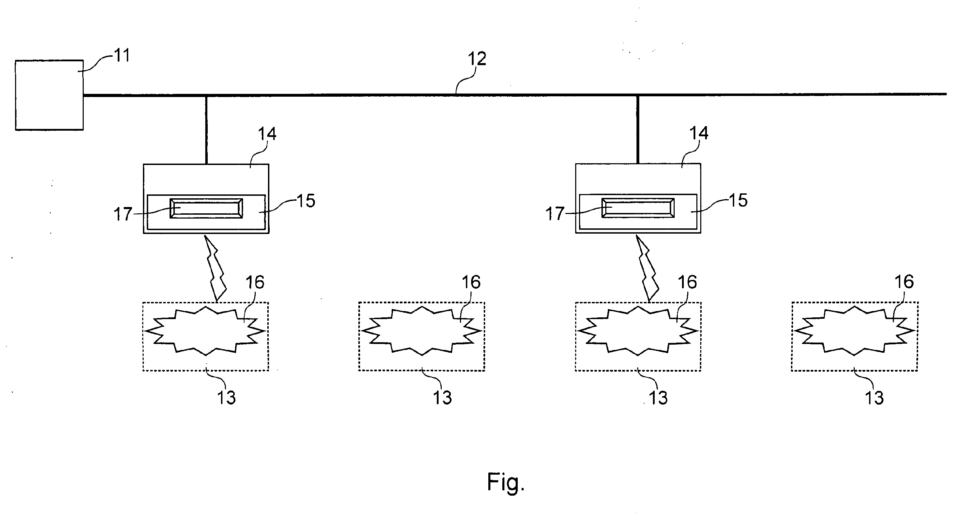

Zusätzliche Weiterbildungen und Alternativen ergeben sich aus den weiteren Ansprüchen und, auch hinsichtlich deren Vorteilen, aus nachstehender Beschreibung eines auf das hier Funktionswesentliche stark abstrahiert skizzierten bevorzugten Realisierungsbeispiels zur erfindungsgemäßen Lösung. Die einzige Figur der Zeichnung zeigt symbolisch vereinfacht Geräte-Anschlussmöglichkeiten an individualisierte Betriebs-Orte längs eines Bus-Systems.

Zur Vereinfachung der Darstellung ist in der Zeichnung ein an eine Steuereinheit 11 angeschlossener Zweileiter-Bus 12 für Übermittlung von Adressen und von Steuerungsinformationen (zusätzlich zur nicht dargestellten Stromversorgung) an Geräte 14 skizziert. Längs des Bus 12verteilt sind Betriebs-Orte 13 zum Anschluss von gleichartigen oder verschiedenen Geräten 14 zugänglich. Die Geräte 14 sind dafür mit Adaptern 15 ausgestattet, die für den elektromechanischen Anschluss wie skizziert mit Stiften, aber etwa auch mit anderen Steck- oder Schraubfassungen oder mit Magnetkontakten, ausgelegt sein können - bei korrespondierenden Anschlusseinrichtungen wie etwa den skizzierten Buchsen an den Betriebs-Orten 13.

Um nicht gesondert dokumentieren zu müssen, welches Gerät 14 momentan an welchem von verschiedenen möglichen Orten 13 betrieben wird, ist in unmittelbarer Nähe zum Anschlussbereich eines jeden dieser Orte 13 ein Transponder 16 installiert, der mit seinem Binärkode gerade diesen Ort 13 individualisiert. Die Zuordnung der Orte 13 zu ihren Kodes wird bei der Erstausrüstung einmal erfasst und etwa in der Steuereinheit 11 hinterlegt. Indem eines der Geräte 14 mittels seines Adapters 15 an einem der Orte 13 an den Bus 12 angeschlossen wird, fragt eine gerätefeste, etwa wie skizziert im Adapter 15 angeordnete Leseschaltung 17 die Orts-Kennung aus dem ortsfesten Transponder 16 ab und überträgt sie spontan oder auf Abruf, zusammen mit seiner Individualisierung etwa in Form der Geräteadresse, über den Bus 12 an die Steuereinheit 11. Damit ist festgestellt, dass dieses der Geräte 14 beispielsweise am Ort 13 "rechts außen" betrieben wird und deshalb über die Steuereinheit 11 eine an diesen speziellen Betriebs-Ort 13 angepasste, z.B. andere Klimatisierung erfahren muss, als ein etwa an einem Ort 13 "vorne mittig" betriebenes der Geräte 14.

So ergibt sich erfindungsgemäß für eine Steuereinheit 11 eine automatische Feststellung darüber, welches Gerät 14 gerade an welchem Ort 13 etwa längs eines Bus-Systems 12 betrieben wird, indem jeder Ort 13 fest mit einem ihn individualisierenden, kontaktlos auslesbaren Ident-Transponder 16 ausgestattet wird, dessen Kennung von einer gerätefesten Leseschaltung 17 erstmals schon bei der Geräteinstallation ausgelesen und zusammen mit seiner Geräteadresse an die Steuereinheit 11 übermittelt wird.

## Patentansprüche

1. Verfahren zum Feststellen der Zuordnung eines Gerätes zu einem von mehreren möglichen Betriebs-Orten,
**dadurch gekennzeichnet,**
**dass** jedem der Orte eine ihn individualisierende Kennung fest zugeordnet wird, die am Betriebs-Ort eines Gerätes von diesem Gerät ausgelesen und als Orts-Kennung an eine Steuereinheit übermittelt wird.

2. Verfahren nach Anspruch 1,
**dadurch gekennzeichnet,**
**dass** die Orts-Kennung mit einer Geräteinformation an die Steuereinheit übermittelt wird.

3. Verfahren nach Anspruch 1 oder 2,
**dadurch gekennzeichnet,**
**dass** die Orts-Kennung mit der Installation des Gerätes an diesem Ort ausgelesen wird.

4. Verfahren nach wenigstens einem der Ansprüche 1 bis 3,
**dadurch gekennzeichnet,**
**dass** die Orts-Kennung auch während des Geräte-Betriebes zuweilen ausgelesen und an die Steuereinheit übermittelt wird.

5. Einrichtung zum Ausüben eines der Verfahren nach den vorangehenden Ansprüche,
**dadurch gekennzeichnet,**
**dass** Betriebs-Orte (13) mit Ident-Transpondern (16) und die daran betreibbaren Geräte (14) mit Transponder-Leseschaltungen (17) ausgestattet sind.

6. Einrichtung nach einem der beiden vorangehenden Ansprüche,
**dadurch gekennzeichnet,**
**dass** RFID-Transponder (16) an den Betriebs-Orten (13) vorgesehen sind.

7. Einrichtung nach einem der drei vorangehenden Ansprüche,
**dadurch gekennzeichnet,**
**dass** kontaktlos arbeitende Leseschaltungen (17) an den Geräten (14) vorgesehen sind.
